# EUROPEAN PATENT SPECIFICATION

(11) **EP 2 335 310 B1**
(45) Date of publication and mention of the grant of the patent: **21.08.2013**
(21) Application number: 09828608.1
(22) Date of filing: 06.11.2009
(51) Int. Cl.: H01M 4/62, H01M 10/05, H01M 4/134, H01M 4/1395, H01M 10/0525, H01M 4/04

(54) **SILICON NEGATIVE ELECTRODE, LITHIUM ION BATTERY AND METHOD OF PREPARING THE SAME**
SILICIUM-NEGATIVELEKTRODE, LITHIUMIONENBATTERIE UND HERSTELLUNGSVERFAHREN DAFÜR
ÉLECTRODE NÉGATIVE AU SILICIUM ET BATTERIE AU LITHIUM-ION COMPRENANT CETTE ÉLECTRODE

(30) Priority: 27.11.2008 CN 200810217716
(43) Date of publication of application: 22.06.2011
(73) Proprietor: Byd Company Limited, Shenzhen, Guangdong 518118 (CN)
(72) Inventor: LUO, Xiaojun, Shenzhen Guangdong 518118 (CN); LIANG, Guihai, Shenzhen Guangdong 518118 (CN)
(74) Representative: HOFFMANN EITLE
(86) International application number: PCT/CN2009/074833
(87) International publication number: WO 2010/060348

(56) References cited:
- WO-A1-2007/074654
- CN-A- 1 901 260
- CN-A- 1 921 189
- JP-A- 11 031 513
- JP-A- 2004 200 011
- US-A1- 2005 239 917
- US-A1- 2007 048 609

## Description

### CROSS-REFERENCE TO RELATED APPLICATION

This application claims a priority to Chinese Patent Application No. 200810217716.1, filed on November 27, 2008.

### TECHNICAL FIELD

The present disclosure relates to a silicon negative electrode, a lithium battery, and a method of preparing the same.

### BACKGROUND

Lithium ion batteries have a small volume and a high energy density. They have been widely used in mobile communication devices, digital cameras, laptops and so on. At present, the capacity of conventional rechargeable lithium ion batteries of LiCoO/graphite system has almost reached the maximum theoretical capacity. It may be difficult to increase the volume energy density by further improving properties of electrode materials, or decreasing the thick of current collectors and separators. With the development of mobile electronic devices, it may be desirable to have a high-capacity battery.

In recent years, applications of silicon-based materials in the negative electrode have been widely studied. The Si-based material has both crystal and amorphous forms. The amorphous Si-based material is more suitable for negative electrodes. Furthermore, microcrystal silicon materials can also be used as negative materials. The microcrystal form is a form between the crystal and the amorphous forms. During the charge and discharge processes, lithium ions may be intercalated and de-intercalated with Si-based materials. When lithium ions are intercalated with Si materials, they may form an alloy with the silicon materials, which may provide a high specific capacity for batteries. The theoretical capacity may reach about 4200 mAh/g.

However, the volume of the Si-based material may change with the intercalation and de-intercalation of lithium ions. For example, the volume of the Si-based material may expand about 4 times of the original size after the intercalation of lithium ions. The volume change may cause a series of problems. For example, the negative electrode material may be crushed and powdered during the charge and discharge cycling and may lose the ability to intercalate and de-intercalate lithium. The performance of the battery may be deteriorated because of the flaking of the negative electrode materials from the current collector, wrinkling of current collectors, and bulging deformation of battery cores.

As an important part of the negative electrode material, a binder is used to hold the material particles together and also attach the particles onto the current collector. The binder also prevents negative active materials from crushing and powdering. Therefore, it determines the performance of the electrode to a great extent. At present, the common electrode binders are styrene-butadiene rubber (SBR) and fluorine-containing polymers without functional groups.

For example, polyvinylidene fluoride (PVDF) has been used in negative electrodes. PVDF has a strong binding force. However, PVDF may swell in most organic electrolytes, such as propylene carbonate, dimethoxy ethane and γ-butyrolactone. After swelling, the binding force of the binder may decrease and the microstructure of electrode materials may not be recovered. Thus it may have a negative effect on the battery performance.

Another commonly used binder, SBR, has a good elasticity. However, it has a relatively weak binding force. The binding may not be stable between the particles and between the particles and the current collectors. The electrode performance of the negative electrode may be low. For the Si negative electrode that has a high volumetric expansion, SBR may not meet the requirements. Therefore, it would be desirable to develop an improved binder in order to improve the performance of batteries.

US 2007/048609 describes a negative electrode for a non-aqueous electrolyte secondary battery comprising an active material including Si, a conductive material, and a binder. The binder is polyimide and polyacrylic acid, and the conductive material is a carbon material.

WO 2007/074654 concerns a nonaqueous electrolyte secondary battery comprising a negative electrode, a positive electrode and a nonaqueous electrolyte arranged between the electrodes. The negative electrode mix layer containing at least an active material capable of adsorbing and desorbing lithium ions is formed on at least one surface of a collector of the negative electrode, and is provided with a plurality of parallel mix layer expansion adsorbing grooves in a position where the negative electrode mix layer faces the positive electrode mix layer, so that the collector is exposed from the grooves.

US 2005/239917 describes inks which are provided in formulations suitable for printing using a variety of printing techniques, including screen printing, offset litho printing, gravure printing, flexographic printing, pad printing and inkjet printing. The inks include lithium metal powder, a polymer binder and optionally electrically conductive materials and/or lithium salts in a solvent. The inks are well suited for use in printing electrodes for use in lithium metal batteries. Batteries made from lithium powder based anodes and electronic applications such as RFID labels, Smart Cards and wearable medical devices are also described.

### SUMMARY

In viewing thereof, the present invention is directed to solve at least one of the problems existing in the prior art. Accordingly, in one aspect of the present invention, a silicon negative electrode comprises a current collector and a silicon negative electrode material coated on the current collector. The silicon negative electrode material comprises a silicon negative active material and a binder according to claim 1. The binder comprises a first polymer, a second polymer, and a third polymer. The first polymer is selected from the group consisting of polyvinylidene fluoride, polytetrafluoroethylene, polyhexafluoropropylene, a copolymer of vinylidene fluoride and hexafluoropropylene, and combinations thereof. The second polymer comprises at least one monomer selected from the group consisting of acrylonitrile, methacrylonitrile, acrylates, methacrylates. The third polymer is selected from the group consisting of polyvinylpyrrolidone, polyalkylidene glycol, polyacrylamide, polyethylene glycol, and combinations thereof.

In another aspect of the present invention, a lithium ion battery comprises: a negative electrode; a positive electrode; a non-aqueous electrolyte in contact with the negative electrode and the positive electrode; a separator disposed between the negative electrode and the positive electrode; and a shell. The negative electrode, the positive electrode, the separator and the electrolyte are disposed in the shell. The shell is sealed. The silicon negative electrode comprises a current collector coated with a negative electrode material. The negative electrode material comprises a silicon negative active material and a binder. The binder comprises the first polymer, the second polymer, and the third polymer as defined above.

In yet another aspect of the present invention, a method of preparing a negative electrode comprises coating a negative electrode material onto a negative current collector. The negative electrode material comprises a silicon negative active material and a binder. The binder comprises the first polymer, the second polymer, and the third polymer as defined above..

### DETAILED DESCRIPTION OF THE PREFERRED EMBODIMENTS

The present disclosure provides a silicon negative electrode. The silicon negative electrode comprises a current collector coated with a negative electrode material. The negative electrode material comprises a silicon negative active material and a binder. The binder comprises the first polymer, the second polymer, and the third polymer as defined above.

The first polymer can comprise a fluorine-containing monomer selected from the group consisting of vinylidene fluoride, tetrafluoroethylene, , and combinations thereof..

Preferably, the number average molecular weight of the fluorine-containing polymer is in a range of between about 1×10⁵ and about 1×10⁷. More preferably, it is in a range of between about 2×10⁵ and about 7×10⁶. In this molecular weight range, the binder may not swell easily. The binding force may be enhanced during the cycling process, and the flaking of the electrode material may be avoided too. Thus, the cycling performance may be improved.

The second polymer can be any suitable polymer. For example, the monomer can be selected from the group consisting of acrylonitrile, methacrylonitrile, acrylates, methacrylates, and combinations thereof. Preferably, the second polymer is selected from the group consisting of polyacrylonitrile, polymethacrylonitrile, polyacrylate, polymethacrylate, and combinations thereof. The acrylate monomers can include but not limit to methyl acrylate, ethyl acrylate, propyl acrylate, butyl acrylate, pentyl acrylate, dodecyl acrylate, and the isomers thereof. The methacrylate monomers can be but not limit to methyl methacrylate, ethyl methacrylate, propyl methacrylate, butyl methacrylate, pentyl methacrylate, dodecyl methacrylate, and the isomers thereof.

Preferably, the second polymer is selected from the group consisting of polyacrylonitrile, polymethacrylonitrile, polymethacrylate, and combinations thereof. These polymers may increase the interactions between the negative active materials and improve the performance of the Si negative electrode. Preferably, the number average molecular weight is in a range of between about 1×10³ and about 1×10⁶. More preferably, it is in a range of between about 3×10³ and about 5×10⁵.

The third polymer can be any suitable material. Preferably, the third polymer is selected from the group consisting of polyvinylpyrrolidone (PVP), polyglycol (PEG), poly(alkylidene)glycol, polyacrylamide, and combinations thereof. Preferably, the third polymer has a number average molecular weight in a range of between about 500 and about 1×10⁷. The third polymer in the present disclosure has a binding force higher than 25 g/cm and may improve the binding force of the silicon negative electrode.

Preferably, the weight percentage of the first polymer is about 1-90% of the total weight of the binder. More preferably, it is about 30%-60%. The weight percentage of the second polymer is about 1-60% of the total weight of the binder. More preferably, it is about 30%-60%. The weight percentage of the third polymer is about 0.001-50% of the total weight of the binder. More preferably, it is about 10%-30%.

The binder in the present disclosure is a combination of three polymers and has a relatively high binding force. A small amount of the binder would hold negative material particles together and increase the adhesive force of the negative materials to the current collector. Thus it may help to increase the specific capacity of the battery and rate charge and discharge performance. Meanwhile, the binder of the present disclosure would not swell or only swell slightly in the electrolyte. The electrode material may not flake in the cycling processes. The high binding force may be maintained and the cycling performance of the lithium ion battery may be enhanced. Furthermore, the binder of the present disclosure may enhance the porosity of the Si-based materials and improve the microstructure of the materials. High porosity may decrease volume expansion caused by the intercalation and de-intercalation of lithium ions. Thus the cycling performance of the lithium ion batteries may be enhanced. Also the binder may strengthen the interactions between the material particles. Thus, electrodes may have good mechanical properties. The ion transfer may be facilitated in the material and the conductivity of the electrode may be enhanced. Therefore, the discharging performance of the battery may be enhanced.

Preferably, the binder is distributed into a dispersant. The dispersant can be any suitable reagent, such as organic solvents. For example, the dispersant is selected from the group consisting of N-methyl-2-pyrrolidone(NMP), propylene carbonate(PC), ethylene carbonate(EC), di-methoxy ethane(DME), dioxolane(DO), tetrahydrofuran(THF), acetonitrile(CH₃CN), diethyl carbonate(DEC), dimethyl carbonate(DMC), ethyl methyl carbonate(EMC), dimethyl sulfoxide(DMSO), methyl acetate(MA), methyl formate (MF), sulfolane, and combinations thereof. The first polymer, the second polymer, and the third polymer can be added into the dispersant in any order. In the present disclosure, the silicon negative electrode material can be prepared by adding a Si negative active material, a conductive agent, an additive into the mixture of the binder and the dispersant. The mixture should be sticky and can be coated onto a current collector. Commonly, based on 100 parts by weight of the silicon negative active material, the dispersant is about 100-173 parts by weight. Preferably, it is about 127-173 parts by weight.

In the silicon negative electrode provided in the present disclosure, based on 100 parts by weight of the Si negative electrode material, preferably, the binder is about 8-12.5 parts by weight. More preferably, it is about 10-12 parts by weight.

The Si negative electrode active material in the present disclosure is preferably to be a composite of a metal and a silicon material. For example, it can be Si-Ti-Cu with a weight ratio of about 1:1:1. It can also be Si-Cu with a weight ratio of about 1:2.

The Si negative electrode material may optionally comprise a conductive agent. The conductive agent is selected from the group consisting of graphite, carbon black, acetylene black, colloidal carbon, carbon fiber, and combinations thereof. Based on 100 parts by weight of the Si negative active material, the conductive agent can be about 0.01-5 parts by weight. Preferably, it is about 1-5 parts by weight. More preferably, it is about 3-5 parts by weight.

The current collector in the present disclosure can be any conventional negative current collector used in the lithium ion batteries. In the preferred embodiments of the present disclosure, Cu foil is a preferred current collector.

A method of preparing a negative electrode is provided. The method comprises coating a negative electrode material onto a negative current collector. The negative electrode material comprises a silicon negative active material and a binder. The binder comprises a first polymer, a second polymer, and a third polymer. The first polymer comprises a fluorine-containing monomer. The second polymer comprises a monomer selected from the group consisting of acrylonitrile, methacrylonitrile, acrylates, methacrylates, and combinations thereof. The third polymer is selected from the group consisting of polyvinylpyrrolidone, poly(alkylidene) glycol, acrylamide, polyethylene glycol, and combinations thereof.

The method can further comprise forming a coating material. For example, a Si based active material, a binder, acetylene black, and a solvent can be mixed to provide a coating material. The method can also comprise drying and pressing the coated collector. The method for drying and pressing is known to those skilled in the art.

In the present disclosure, a lithium ion battery is provided. The battery comprises a shell, a negative electrode, a positive electrode, a separator, and a non-aqueous electrolyte. The electrolyte is in contact with the negative electrode and the positive electrode. The separator is disposed between the negative electrode and the positive electrode. The negative electrode, the positive electrode, the separator, and the electrolyte are disposed in the shell. The shell is sealed. The negative electrode comprises a current collector coated with a silicon negative electrode material. The negative electrode material comprises a silicon negative active material and a binder. The binder comprises a first polymer, a second polymer, and a third polymer. The first polymer comprises a fluorine-containing monomer. The second polymer comprises at least one monomer selected from the group consisting of acrylonitrile, methacrylonitrile, acrylates, methacrylates. The third polymer is selected from the group consisting of polyvinylpyrrolidone, polyalkylidene glycol, acrylamide, polyethylene glycol, and combinations thereof.

Conventional positive electrodes, separators and non aqueous electrolytes can be used in the present disclosure. For example, the separator can be a microporous polyolefin film. The positive electrode can be prepared according to traditional methods. The composition of the positive material is known in the art. For example, the positive electrode comprises a current collector coated with a positive electrode material. Commonly, the positive material comprises a positive active material, a conductive agent and a binder. The positive active material can be any suitable positive material known in the art. For example, it can be selected from the group consisting of LiCoO₂, LiNiO₂, LiFeO₂, LiMn₂O₄, and combinations thereof. In the present disclosure, the preferred positive electrode material has a formula of LiₓFe_{y}M_{1-y}PO₄, 0.01≤x≤1.5, 0<y≤1. M is one member selected from B, Al, Mg, Ga, and the transition metal elements. Another example of the positive electrode material has a formula of Li₁₊ₓNi_{1-y-z}Mn_{y}Co_{z}LO₂, -0.1≤x≤0.2, 0≤y≤1, 0≤z≤1, 0≤y+z≤1.0. L is at least one member selected from B, Al, Mg, Ga and the transition metal elements. The binder can be any conventional binder used in the positive electrode of the lithium ion batteries. For example, it is selected from the group consisting of polyvinylidene fluoride(PVDF), polytetrafluoroethylene(PTFE), polyvinylchloride(PVC), styrene-butadiene rubber(SBR), latex of styrene-butadiene rubber (SBR), and combinations thereof. Based on 100 parts of the positive active material by weight, the binder is preferably to be about 2-10 parts by weight. More preferably, it is about 2-8 parts by weight. The conductive agent can be any conventional positive conductive agent. For example, it is selected from the group consisting of acetylene black, conductive carbon black, conductive graphite, and combinations thereof. Based on 100 parts of positive electrode active material by weight, the conductive agent is preferred to be 1-15 parts by weight. More preferably, it is about 2-10 parts by weight. The method for preparing the positive electrode can be any conventional method known to the art. The current collector of the positive electrode can by any traditional positive current collector in the lithium ion batteries. In the preferred embodiment of the present disclosure, Al foil is used as the positive electrode current collector.

The non aqueous electrolyte can be any traditional non aqueous electrolyte known in the art. Typically, it is a solution of lithium salt in a non aqueous solvent. The lithium electrolyte salt can be selected from the group consisting of LiPF₆, LiAsF₆, LiSbF₆, LiClO₄, LiBF₄, LiB₁₀Cl₁₀, LiAlCl₄, LiB(C₂H₅)₄, LiCF₃CO₂, LiCF₃SO₃, LiCH₃SO₃, LiC₄F₉S₃, Li(CF₃SO₃)₂N, lithium halides, short chain alkyl fatty acid lithium salts, and combinations thereof. The non aqueous solvent can be a mixed solution of a short-chain alky ester and other solvents. The short chain alky ester can be selected from the group consisting of dimethyl carbonate(DMC), diethyl carbonate(DEC), ethyl methyl carbonate(EMC), methyl propyl carbonate(MPC), dipropyl carbonate(DPC), fluorine-containing esters, sulfur-containing esters, unsaturated esters, and combinations thereof. The other solvent can be at least one selected from ethylene carbonate (EC), propylene carbonate (PC), vinyl carbonate (VC), γ-butyrolactone (γ-BL), sultone, fluorine-containing esters, sulfur-containing esters, and unsaturated cyclic esters. The amount of the electrolyte is 1.5-4.9 g/Ah. The concentration of lithium salt is about 0.5-2.9 mol/L.

The lithium ion batteries in the present disclosure can be prepared by conventional methods. Commonly, a separator is placed between the positive electrode and the negative electrode to form a cell core. The core is disposed in a battery shell. The electrolyte is injected into the shell. The shell is sealed to provide a lithium ion battery.

The aforementioned features and advantages of the invention as well as additional features and advantages thereof will be more clearly understood hereafter as a result of a detailed description of the following embodiments.

### Example 1

### (1) Preparation of the Si negative active electrode material

Silicon powder(1-5 µm, 99.9%, CHINA KAIHUA YUANTONG SILICON INDUSTRY CO., LTD.), Ti powder (45 µm, 99%, CHINA SHENZHEN SHIHUA TECHNOLOGY CO., LTD.), and Cu powder (45 um, 99.9%, BEIJING HAOYUN INDUSTRY CO., LTD.) are mixed at a weight ratio of about 1:1:1. Then the mixture is ball milled in a planetary ball milling machine (model QM-3SP4J) at a speed of about 300 r/min for about 24 hours. After the ball-milling, the mixture is sifted through a 400-mesh screen to provide a silicon negative active electrode material.

The obtained sample is tested on an XRD instrument of model D/MAX2200PC in the Rigaku Corporation. Cu₃Si, Si, Ti and Cu are found.

### (2) Preparation of Si negative electrode

6.7g of a second polymer PAN (Shangyu Wuyue trade Co., Ltd. The molecular weight is 50,000) is dissolved into 221 g of NMP to provide a solution. Then 6.7 g of a first polymer PVDF (Shanghai Aifu New Material Co., Ltd, 7200#) and 4.3 g of a third polymer PVP (Sinopharm Chemical Reagent Co.,Ltd, the molecular weight is 30,000) is dissolved into the above mentioned binder solution in sequence to provide a binder solution. The weight ratio of the binder is about 7% in the solution.

The Si negative active electrode material is added into the binder solution at a weight ratio of about 9:1 to provide a mixture. The mixture is stirred in a vacuum mixer to form a stable and uniform slurry. The slurry is then coated on a Cu foil uniformly. A pressure of about 2 MP is applied onto the coated foil. Then the coated foil is treated at a temperature of about 300 °C in nitrogen for about 24 hours. The foil is pressed and cut into negative plates in a size of about 416 mm × 45 mm. Each of the negative plate comprised around 2.8 g of negative active materials.

### (3) Preparation of batteries

90 g polyvinylidene fluoride (ATOFINA co,. 761#PVDF) is dissolved in 1350 g N-methyl-2- pyrrolidone to provide a binder solution. Then to the solution is added 2895 g LiCoO₂ (FMC company's product). The solution is mixed sufficiently to provide a positive slurry. The positive slurry is coated uniformly onto an aluminum foil and dried for about 1 hour under 125 °C. Then the coated foil is pressed and cut into positive electrode plates of a size of about 424 × 44 mm. Each positive electrode plate comprised around 6.1 g of positive active materials.

The positive electrode plates, polypropylene separators with a thickness of 20 um, and the negative electrode plates are stacked in sequence to form a cell core. The cell core is disposed into a battery shell. An electrolyte is injected into the battery shell at an amount of 3.8 g/Ah. The shell is sealed to form a regular LP053450 battery. The battery electrolyte comprised LiPF₆ at a concentration of about 1 mol/L and a non aqueous solvent. The non aqueous solvent is a mixture of ethylene carbonate(EC) and diethyl carbonate(DEC) at a weight ratio of about 1:1.

### Example 2

The same preparation method is employed to prepare a Si negative electrode and a battery. The only difference is the first polymer in the binder is PTFE (Zhejiang Juhua Co., limited, the molecular weight is about 8×10⁵).

### Example 3

A Si negative electrode and a battery are prepared by the same method in example 1. The only difference is that the second polymer is ethylene acrylic acid copolymer (the molecular weight is about 200,000).

### Example 4

A Si negative electrode and a battery are prepared by the same method in example 1. The only difference is that the third polymer is PEG (the molecular weight is 200,000, Shanghai Sanpu Chemical co., LTD.).

### Example 5

A Si negative electrode and a battery are prepared by the same method in example 1. The difference is that the first polymer is PVDF (Shanghai Aifu New Material Co., Ltd, 7200#) and the amount is about 1.67 g. The amount of the second polymer PAN (Shangyu Wuyue trade Co., Ltd.) is about 0.5 g. The amount of the third polymer PVP (Sinopharm Chemical Reagent Co.,Ltd) is about 0.4 g.

### Example 6

A Si negative electrode and a battery are prepared by the same method in example 1. The difference is that the first polymer is PVDF (Shanghai Aifu New Material Co., Ltd, 7200#) and the amount is about 1.67 g. The amount of the second polymer PAN (Shangyu Wuyue trade Co., Ltd.) is about 13.36 g. The amount of the third polymer PVP (Sinopharm Chemical Reagent Co.,Ltd) is about 1.67 g.

### Control 1

A Si negative electrode and a battery are prepared by the same method in example 1. The difference is that the binder comprised PVDF and PAN.

### Control 2

A Si negative electrode and a battery are prepared by the same method in example 1. The difference is that the binder comprised PVDF, PAN and PI (polyimide) (Changzhou Guangchen new plastics co., Ltd).

### Performance test:

1. Battery specific capacity test: the coated electrode plates are cut into round pieces with a diameter of about 15 mm. Lithium plates are used as counter electrodes to prepare CR2016 button batteries. The separator and the electrode are the same as example 1. The separator has a similar size to the negative electrode plate. The test is performed under room temperature and a humidity of about 25%-85%. The testing steps included: discharging the batteries step by step to simulate a constant voltage discharge. The detailed procedures are: stand by for about 60 min; discharge the battery at a constant current of about 0.2 mA to 0.2 V; discharge the battery at a constant current of about 1, 0.9, 0.8, 0.7, 0.6, 0.5, 0.4, and 0.05 mA successively, each time discharge the battery to 0.005 V, then cut off; stand by for about for 30 min; and charge the battery at a constant current of about 0.5 mA to 2.5 V. The result is shown in table 2.
2. Cycling performance test: the batteries prepared in examples 1-6 and controls1-2 are charged at a current of about 80 mA (0.1C) for about 960 minutes. The clamping voltage is about 4.2 V. After charging, the batteries stood by for about 15 min and then are discharged to about 3.0 V at a constant current of about 160 mA (0.2 C). The initial discharge capacity is tested using a secondary battery property testing equipment BS-9300R. The above mentioned charging and discharging steps are repeated for 50 times. After 50 cycles, the discharging capacities are measured. The discharging capacity retention rates are calculated according to the following formula:
   discharging capacity retention rate = discharging capacity after 50 cycles/ initial discharge capacity × 100%.

The result is shown as table 2.
3. Rate performance test: the test is performed under room temperature. The rate performance is evaluated by the ratio of the capacity at 0.5 C and the capacity at 1C, and the ratio of the capacity at 1 C and the capacity at 0.2 C. The results are shown in table 2.

**Table 1**

| **Binder composition** | **Example 1** | **Example 2** | **Example 3** | **Exa mple 4** | **Example 5** | **Example 6** | **Control 1** | **Control 2** |
|---|---|---|---|---|---|---|---|---|
| First polymer | PVDF 40% | PTFE 40% | PVDF 40% | PVD F 40% | PVDF 95% | PVDF 10% | PVD F 50% | PVD F 40% |
| Second polymer | PAN 40% | PAN 40% | Ethylene acrylic acid copolym er 40% | PAN 40% | PAN 3% | PAN 80% | PAN 50% | PAN 40% |
| Third polymer | PVP 20% | PVP 20% | PVP 20% | PEG 20% | PVP 2% | PVP 10% | non | PI 20% |

**Table 2**

| **Battery performance** | | **Example 1** | **Example 2** | **Example 3** | **Example 4** | **Example 5** | **Example 6** | **Control 1** | **Control 2** |
|---|---|---|---|---|---|---|---|---|---|
| Specific capacity (mAh/g) | | 1100 | 1050 | 1060 | 1000 | 980 | 890 | 790 | 800 |
| Rate proper ties | 0.5C / 0.2C | 99.7 | 98.9 | 98.6 | 98.1 | 98.5 | 97.6 | 95.3 | 95.5 |
| | 1C/ 0.2C | 98.9 | 98.2 | 97.9 | 97.2 | 97.4 | 95.8 | 94.2 | 94.6 |
| Cycling performance | | 89% | 87% | 88% | 85% | 82% | 80% | 75% | 73% |

From the above tables we noted that the batteries using Si negative electrode in the present disclosure had relatively higher specific capacities and better rate discharging properties. The batteries also had better cycling properties and better performances.

Many modifications and other embodiments of the present disclosure will come to mind to one skilled in the art to which the present disclosure pertains having the benefit of the teachings presented in the foregoing description. It will be apparent to those skilled in the art that variations and modifications of the present disclosure can be made without departing from the scope or spirit of the present disclosure. Therefore, it is to be understood that the invention is not limited to the specific embodiments disclosed and that modifications and other embodiments are intended to be included within the scope of the appended claims. Although specific terms are employed herein, they are used in a generic and descriptive sense only and not for purposes of limitation.

## Claims

1. A silicon negative electrode comprising:
a current collector; and
a negative electrode material coated on the current collector,
wherein the negative electrode material comprises a silicon negative active material and a binder;
wherein the binder comprises a first polymer, a second polymer, and a third polymer;
wherein the first polymer is selected from the group consisting of polyvinylidene fluoride, polytetrafluoroethylene, polyhexafluoropropylene, a copolymer of vinylidene fluoride and hexafluoropropylene, and combinations thereof; the second polymer comprises at least one monomer selected from the group consisting of acrylonitrile, methacrylonitrile, acrylates, methacrylates; and the third polymer is selected from the group consisting of polyvinylpyrrolidone, polyalkylidene glycol, polyacrylamide, polyethylene glycol, and combinations thereof.

2. The silicon negative electrode of claim 1, wherein the weight percentage of the first polymer is 1-90% of the total weight of the binder; the weight percentage of the second polymer is 1-60% of the total weight of the binder; and the weight percentage of the third polymer is 0.001-50% of the total weight of the binder.

3. The silicon negative electrode of claim 1, wherein the first polymer comprises a monomer selected from the group consisting of vinylidene fluoride, tetrafluoroethylene and combinations thereof.

4. The silicon negative electrode of claim 1, wherein the first polymer has a number average molecular weight in a range of between 1×10⁴ and 1×10⁷.

5. The silicon negative electrode of claim 1, wherein the second polymer is selected from the group consisting of polyacrylonitrile, polymethacrylonitrile, polyacrylate, polymethacrylate, and combinations thereof and the second polymer has a number average molecular weight in a range of between 1×10³ and 1×10⁶.

6. The silicon negative electrode of claim 1, wherein the third polymer is selected from the group consisting of polyvinylpyrrolidone, polyglycol, and combinations thereof.

7. The silicon negative electrode of claim 1, wherein the third polymer has a number average molecular weight in a range of between 500 and 1×10⁷.

8. The silicon negative electrode of claim 1, wherein the weight ratio of the silicon negative active material and the binder is in a range of between 100:8 and 100:12.5.

9. The silicon negative electrode of claim 1, wherein the negative electrode material further comprises a conductive agent and the weight ratio of the silicon negative active material and the conductive agent is in a range of between 100:0.01 and 100:5.

10. The silicon negative electrode of claim 1, wherein the silicon negative active material comprises a metal material and a silicon material.

11. A method of preparing a negative electrode comprising:
coating a negative electrode material onto a negative current collector;
wherein the negative electrode material comprises a silicon negative active material and a binder;
wherein the binder comprises a first polymer, a second polymer, and a third polymer;
wherein the first polymer is selected from the group consisting of polyvinylidene fluoride, polytetrafluoroethylene, polyhexafluoropropylene, a copolymer of vinylidene fluoride and hexafluoropropylene; the second polymer comprises at least one monomer selected from the group consisting of acrylonitrile, methacrylonitrile, acrylates, methacrylates; and the third polymer is selected from the group consisting of polyvinylpyrrolidone, polyalkylidene glycol, polyacrylamide, polyethylene glycol, and combinations thereof.

12. A lithium battery comprising:
the silicon negative electrode according to any of the claims 1 to 10;
a positive electrode;
a non-aqueous electrolyte in contact with the negative electrode and the positive electrode;
a separator disposed between the negative electrode and the positive electrode; and
a shell;
wherein the negative electrode, the positive electrode, the separator, and the electrolyte are disposed in the shell; and the shell is sealed.

## Patentansprüche

1. Negative Siliziumelektrode, umfassend:
einen Stromkollektor; und
ein Negativ-Elektrodenmaterial, das auf den Stromkollektor geschichtet ist,
worin das Negativ-Elektrodenmaterial ein Silizium-Negativ-Elektrodenmaterial und ein Bindemittel umfasst;
worin das Bindemittel ein erstes Polymer, ein zweites Polymer und ein drittes Polymer umfasst;
worin das erste Polymer aus der Gruppe bestehend aus Polyvinylidenfluorid, Polytetrafluoroethylen, Polyhexafluoropropylen, einem Copolymer aus Vinylidenfluorid und Hexafluoropropylen und
Kombinationen daraus ausgewählt ist; das zweite Polymer zumindest ein Monomer ausgewählt aus der Gruppe bestehend aus Acrylnitril, Methacrylnitril, Acrylaten,
Methacrylaten umfasst; und das dritte Polymer aus der Gruppe bestehend aus Polyvinylpyrrolidon, Polyalkylidenglycol, Polyacrylamid, Polyethylenglycol und Kombination daraus ausgewählt ist.

2. Negative Siliziumelektrode gemäß Anspruch 1, worin der Gewichtsprozentwert des ersten Polymers 1 bis 90 % des Gesamtgewichts des Bindemittels ist; der Gewichtsprozentwert des zweiten Polymers 1 bis 60 % des Gesamtgewichts des Bindemittels ist; und der Gewichtsprozentwert des dritten Polymers 0,001 bis 50 % des Gesamtgewichts des Bindemittels ist.

3. Negative Siliziumelektrode gemäß Anspruch 1, worin das erste Polymer ein Monomer ausgewählt aus der Gruppe bestehend aus Vinylidenfluorid, Tetrafluoroethylen und Kombinationen umfasst.

4. Negative Siliziumelektrode gemäß Anspruch 1, worin das erste Polymer ein zahlengemitteltes Molekulargewicht in einem Bereich zwischen 1 x 10⁴ und 1 x 10⁷ aufweist.

5. Negative Siliziumelektrode gemäß Anspruch 1, worin das zweite Polymer aus der Gruppe bestehend aus Polyacrylnitril, Polymethacrylnitril, Polyacrylat, Polymethacrylat und Kombination davon ausgewählt ist und das zweite Polymer ein zahlengemitteltes Molekulargewicht in einem Bereich zwischen 1 x 10³ und 1 x 10⁶ aufweist.

6. Negative Siliziumelektrode gemäß Anspruch 1, worin das dritte Polymer aus der Gruppe bestehend aus Polyvinylpyrrolidon, Polyglykol und Kombinationen davon ausgewählt ist.

7. Negative Siliziumelektrode gemäß Anspruch 1, worin das dritte Polymer ein zahlengemitteltes Molekulargewicht in einem Bereich zwischen 500 und 1 x 10⁷ aufweist.

8. Negative Siliziumelektrode gemäß Anspruch 1, worin Gewichtsverhältnis des negativen Silizium-Aktivmaterials und des Bindemittel in einem Bereich zwischen 100:8 und 100:12,5 ist.

9. Negative Siliziumelektrode gemäß Anspruch 1, worin das negative Elektrodenmaterial weiterhin ein leitfähiges Mittel umfasst und das Gewichtsverhältnis des negativen Silizium-Aktivmaterials und des leitfähigen Mittels in einem Bereich von zwischen 100:0,01 und 100:5 ist.

10. Negative Siliziumelektrode gemäß Anspruch 1, worin das negative Silizium-Aktivmaterial ein Metallmaterial und Siliziummaterial umfasst.

11. Verfahren zur Herstellung einer negativen Elektrode, umfassend:
Schichten eines negativen Elektrodenmaterials auf eine negativen Stromkollektor;
worin das negative Elektrodenmaterial ein negatives Silizium-Aktivmaterial und ein Bindemittel umfasst;
worin das Bindemittel ein erstes Polymer, ein zweites Polymer und ein drittes Polymer umfasst;
worin das erste Polymer aus der Gruppe bestehend aus Polyvinylidenfluorid, Polytetrafluoroethylen, Polyhexafluoropropylen, einem Copolymer aus Vinylidenfluorid und Hexafluoropropylen ausgewählt ist;
das zweite Polymer zumindest ein Monomer ausgewählt aus der Gruppe bestehend aus Acrylnitril, Methacrylnitril, Acrylaten, Methacrylaten umfasst; und das dritte Polymer aus der Gruppe bestehend aus Polyvinylpyrrolidon, Polyalkylidenglycol, Polyacrylamid, Polyethylenglycol und Kombination daraus ausgewählt ist.

12. Lithiumbatterie, umfassend:
die negative Siliziumelektrode gemäß irgendeinem der Ansprüche 1 bis 10;
eine positive Elektrode;
einen nicht-wässrigen Elektrolyten, der in Kontakt mit der negativen Elektrode und der positiven Elektrode steht;
einen Separator, der zwischen die negative Elektrode und
die positive Elektrode eingebracht ist; und
eine Hülle;
worin die negative Elektrode, die positive Elektrode,
der Separator und der Elektrolyt in die Hülle eingebracht sind und die Hülle versiegelt ist.

## Revendications

1. Électrode négative au silicium comprenant :
un collecteur de courant ; et
un matériau d'électrode négative déposé sur le collecteur de courant,
dans laquelle le matériau d'électrode négative comprend un matériau actif négatif au silicium et un liant ;
dans laquelle le liant comprend un premier polymère, un deuxième polymère, et un troisième polymère ;
dans laquelle le premier polymère est choisi parmi le groupe consistant en un poly(fluorure de vinylidène), un polytétrafluoroéthylène, un polyhexafluoropropylène, un copolymère de fluorure de vinylidène et d'hexafluoropropylène, et des combinaisons de ceux-ci ; le deuxième polymère comprend au moins un monomère choisi parmi le groupe consistant en un acrylonitrile, un méthacrylonitrile, des acrylates, des méthacrylates ; et le troisième polymère est choisi parmi le groupe consistant en une polyvinylpyrrolidone, un poly(alkylidène glycol), un polyacrylamide, un poly(éthylène glycol), et des combinaisons de ceux-ci.

2. Électrode négative au silicium selon la revendication 1, dans laquelle le pourcentage en poids du premier polymère est 1 à 90% du poids total du liant ; le pourcentage en poids du deuxième polymère est 1 à 60% du poids total du liant ; et le pourcentage en poids du troisième polymère est 0,001 à 50% du poids total du liant.

3. Électrode négative au silicium selon la revendication 1, dans laquelle le premier polymère comprend un monomère choisi parmi le groupe consistant en un fluorure de vinylidène, un tétrafluoroéthylène et des combinaisons de ceux-ci.

4. Électrode négative au silicium selon la revendication 1, dans laquelle le premier polymère a un poids moléculaire moyen en nombre dans une plage d'entre 1x10⁴ et 1x10⁷.

5. Électrode négative au silicium selon la revendication 1, dans laquelle le deuxième polymère est choisi parmi le groupe consistant en un polyacrylonitrile, un polyméthacrylonitrile, un polyacrylate, un polyméthacrylate, et des combinaisons de ceux-ci et le deuxième polymère a un poids moléculaire moyen en nombre dans une plage d'entre 1x10³ et 1x10⁶.

6. Électrode négative au silicium selon la revendication 1, dans laquelle le troisième polymère est choisi parmi le groupe consistant en une polyvinylpyrrolidone, un polyglycol, et des combinaisons de ceux-ci.

7. Électrode négative au silicium selon la revendication 1, dans laquelle le troisième polymère a un poids moléculaire moyen en nombre dans une plage d'entre 500 et 1x10⁷.

8. Électrode négative au silicium selon la revendication 1, dans laquelle le rapport en poids du matériau actif négatif au silicium et du liant est dans une plage d'entre 100:8 et 100:12,5.

9. Électrode négative au silicium selon la revendication 1, dans laquelle le matériau d'électrode négative comprend en outre un agent conducteur et le rapport en poids du matériau actif négatif au silicium et de l'agent conducteur est dans une plage d'entre 100:0,01 et 100:5.

10. Électrode négative au silicium selon la revendication 1, dans laquelle le matériau actif négatif au silicium comprend un matériau métallique et un matériau de silicium.

11. Procédé de préparation d'une électrode négative comprenant :
le dépôt d'un matériau d'électrode négative sur un collecteur de courant négatif ;
dans lequel le matériau d'électrode négative comprend un matériau actif négatif au silicium et un liant ;
dans lequel le liant comprend un premier polymère, un deuxième polymère, et un troisième polymère ;
dans lequel le premier polymère est choisi parmi le groupe consistant en un poly(fluorure de vinylidène), un polytétrafluoroéthylène, un polyhexafluoropropylène, un copolymère de fluorure de vinylidène et d'hexafluoropropylène; le deuxième polymère comprend au moins un monomère choisi parmi le groupe consistant en un acrylonitrile, un méthacrylonitrile, des acrylates, des méthacrylates ; et le troisième polymère est choisi parmi le groupe consistant en une polyvinylpyrrolidone, un poly(alkylidène glycol), un polyacrylamide, un poly(éthylène glycol), et des combinaisons de ceux-ci.

12. Batterie au lithium comprenant :
l'électrode négative au silicium selon l'une quelconque des revendications 1 à 10 ;
une électrode positive ;
un électrolyte non aqueux en contact avec l'électrode négative et l'électrode positive ;
un séparateur disposé entre l'électrode négative et l'électrode positive ; et
une enveloppe ;
dans laquelle l'électrode négative, l'électrode positive, le séparateur, et l'électrolyte sont disposés dans l'enveloppe ; et l'enveloppe est fermée de façon étanche.
